# EUROPEAN PATENT APPLICATION

(11) **EP 4 589 836 A1**
(43) Date of publication of application: **23.07.2025**
(21) Application number: 24152723.3
(22) Date of filing: 18.01.2024
(51) Int. Cl.: H02N 2/18, B64D 27/351

(54) **PIEZOELECTRIC ENERGY RECOVERY SYSTEM**

(71) Applicant: B/E Aerospace Inc., Winston Salem, NC 27105 (US)
(72) Inventor: LADRES, Marjaniza-Li, San Pascual (PH); PASCUAL, Michael Jhon Enopia, Makati City (PH); CAINDAY, Keith Justin Lasola, Muntinlupa City (PH); LOMIBAO, John Paul, General Trias Cavite City (PH); CUARTO, Mark Salvador Panganiban, Quezon (PH)
(74) Representative: Dehns

(57) **Abstract**

An energy recovery system comprising: one or more vibrating components (20, 30, 40), one or more piezoelectric elements (10, 10a) arranged on or adjacent said one or more vibrating components to generate an electrical energy in response to vibrational movement of the one or more vibrating components; and a storage device (5) to store the electrical energy generated by the one or more piezoelectric elements.

## Description

### TECHNICAL FIELD

The present disclosure concerns the use of piezoelectric components to recover energy for powering components such as, but not exclusively, components in aircraft galley units.

### BACKGROUND

Many electrical or mechanical devices or components vibrate during operation. Such vibration is a form of energy, but this vibrational energy is usually wasted energy and is not put to any use or harnessed in any way. For example, aircraft galley units typically include various devices or appliances such as ovens, chillers, beverage dispensers and the like that have components such as fans, pumps, compressors etc. During operation of the devices or appliances, the components will vibrate. Indeed, there may also be some vibration of the components when they are not operating, purely due to movement of the environment (the galley units/aircraft). It would be useful to be able to harness the energy from such vibrations so that this could be used to supply power to the devices or other loads. This would be particularly desirable in environments where there is a need or desire to reduce power consumption as in aircraft.

### SUMMARY

According to the present disclosure, there is provided an energy recovery system comprising: one or more vibrating components, one or more piezoelectric elements arranged on or adjacent said one or more vibrating components to generate an electrical energy in response to vibrational movement of the one or more vibrating components; and a storage device to store the electrical energy generated by the one or more piezoelectric elements.

According to another aspect, there is provided a galley unit comprising comprising: one or more vibrating components, one or more piezoelectric elements arranged on or adjacent said one or more vibrating components to generate an electrical energy in response to vibrational movement of the one or more vibrating components; and a storage device to store the electrical energy generated by the one or more piezoelectric elements.

The energy storage device, which may be a battery, may be arranged to distribute electrical power to one or more loads such as lights or appliances, which may include appliances that contain the vibrating components that generate the electrical power.

The vibrating components may be e.g. fan motors, compressors or pumps that may be used e.g. for heating and cooling of devices or appliances such as ovens, chillers and beverage dispensers.

The piezoelectric elements may be mounted adjacent or on the vibrating components to harvest the vibrational energy.

### BRIEF DESCRIPTION

Examples of the system according to this disclosure will now be described with reference to the drawings. It should be noted that these are examples only and that variations are possible within the scope of the claims.

Specifically, the examples will be described as components of devices or appliances in an aircraft galley unit. It should be clear, however, that the energy recovery system of this disclosure may have many other applications in systems or environments where components are subject to vibration.
Figure 1 is a schematic view of an aircraft galley incorporating an energy recovery system according to this disclosure.
Figure 2 shows one example of a galley insert using the system of this disclosure.
Figure 3 shows another example of a galley insert using the system of this disclosure.
Figure 4 shows another example of a galley insert using the system of this disclosure.
Figure 5 shows another example of a galley insert using the system of this disclosure.
Figure 6 shows another example of a galley insert using the system of this disclosure.

### DETAILED DESCRIPTION

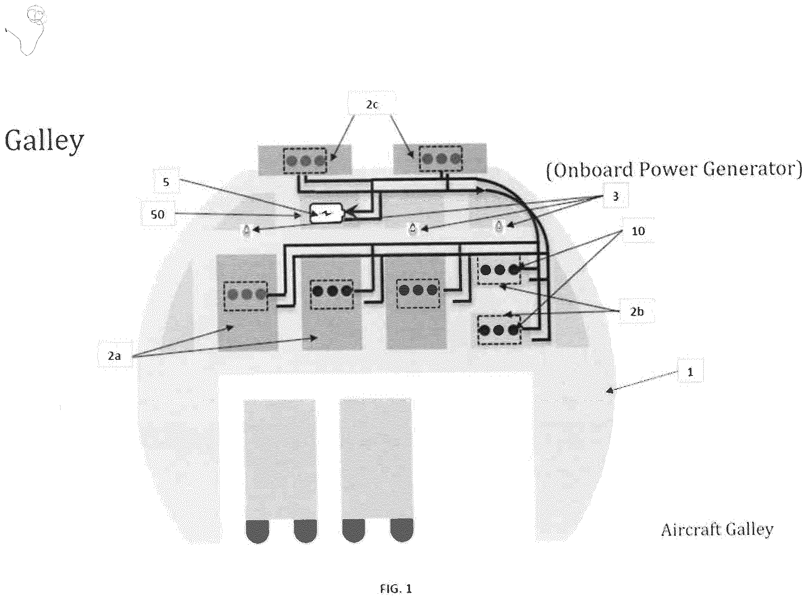

Figure 1 shows, as an example of an environment in which components are mounted that undergo vibration either during operation or due to being in a vibrational environment, an aircraft galley 1. A galley typically accommodates a number of galley inserts 2 and devices and appliances for e.g. storing, heating, chilling, cooking etc. food and beverages. In the example shown, the galley includes galley oven inserts 2a, beverage dispensers 2b and chiller units 2c. The galley may also include lighting 3. Galleys may have different designs and house different galley inserts, units or appliances but the devices and appliances typically require electrical power for heating or cooling and where present, the lighting also requires electrical power. Similar arrangements of devices and appliances that require electrical power may also be found in other environments or applications.

The devices and appliances typically require some form of mechanical component such as a fan, compressor and/or pump to generate heat or cool. Such components vibrate during operation and are, therefore, sources of vibration. The system of this disclosure takes advantage of the fact that these sources of vibration are present and uses piezoelectric elements to harness the vibrations and convert them to electrical energy.

The piezoelectric effect is a known effect whereby an electric charge is proportionally produced from a mechanical stress applied to piezoelectric materials.

Using this effect, the system of this disclosure has one or more piezoelectric elements 10 e.g. piezoelectric plates or films, located on or adjacent the vibration-generating components to receive the vibrations as mechanical stress so as to generate electrical energy. The electrical energy is then stored in a power storing device such as a battery 5.

The stored electrical energy can be used to power the galley devices or appliances/their components, and/or the lighting in the galley or any other loads requiring electrical power. The battery may, depending on the amount of energy stored and the requirements of the loads, be a main power supply or an auxiliary power supply. In an example, the battery could be used to power the galley lighting, to power the standby mode of the galley inserts and/or as a back-up in case of failure of a main power supply.

The piezoelectric elements can be located at any position suitable to receive the vibrations of the components as a mechanical stress on the element. The location of the piezoelectric elements will depend on a number of factors including the strength of the vibrations, the nature of the vibrating components and other requirements of the system. In aircraft, for example, the piezoelectric elements 10 may need to be mounted on the outside of galley units so that they can be easily viewed for certification purposes. In other applications improved energy harvesting might be achieved by locating the piezoelectric elements actually on the vibrating components.

The location of the battery may also be selected according to the size of the battery and the design of the galley or other environment. In the example shown, the battery 5 is placed in an electrical compartment 50 of the galley so that it can be easily connected to the electrical system and can also be easily accessible for e.g. maintenance.

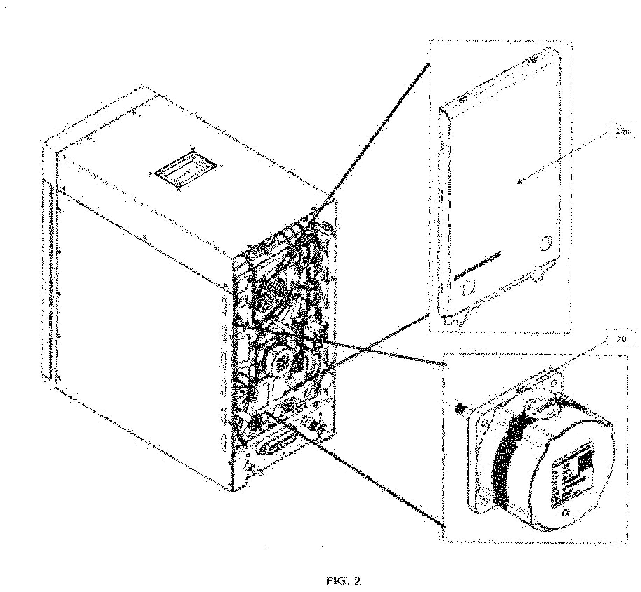

Figure 2 shows an example of a galley unit or insert 2a having, as a vibrating component, a fan motor 20. A piezoelectric element 10 is located at two locations near the fan motor to harvest the vibrational energy from the fan motor 20.

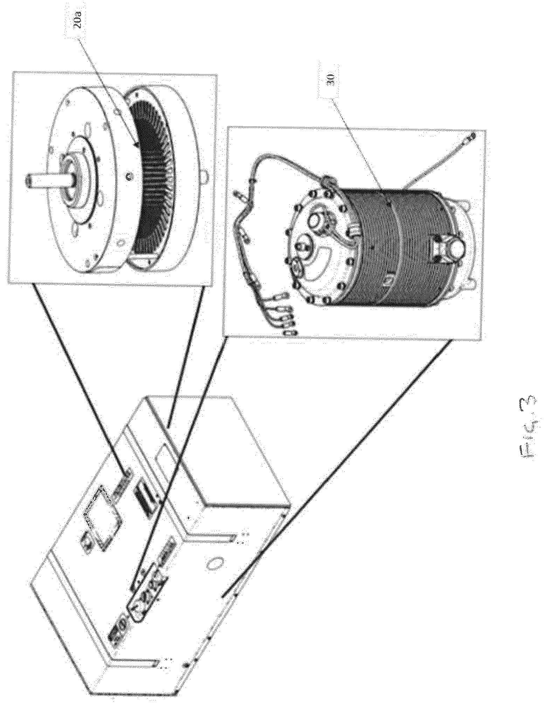

In another example, as shown in Fig. 3, the vibrating components include a fan motor 20a and a compressor 30 and piezoelectric elements will be located to harvest the vibrational energy from these components.

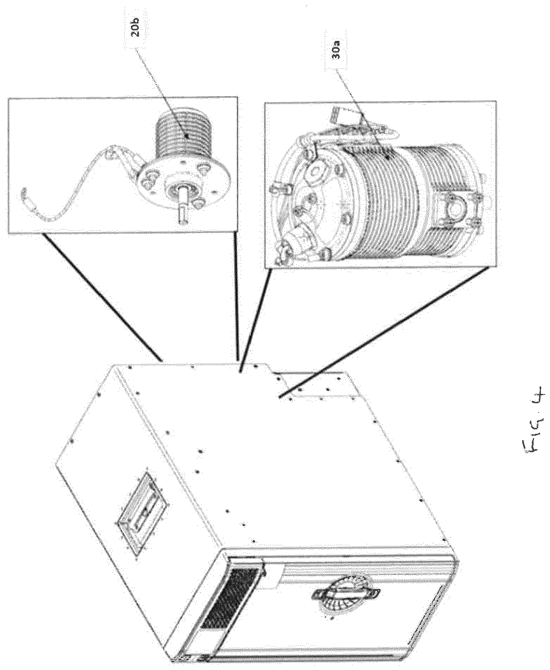

Figure 4 shows another galley unit example with a fan motor 20b and a compressor 30a as vibrating component.

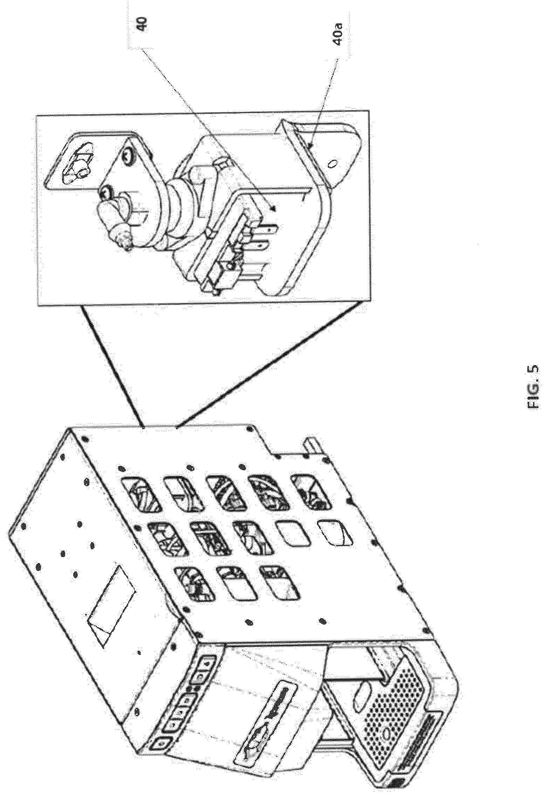

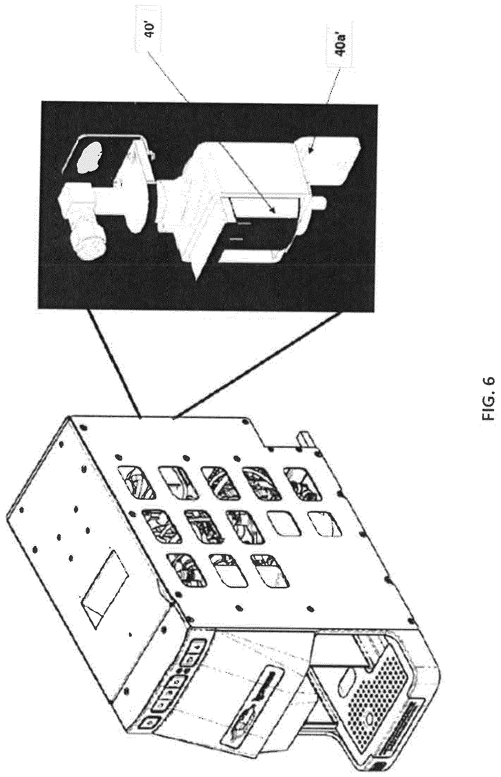

In the example of Figure 5, the vibrating component is a pump assembly 40 and the piezoelectric element could be mounted to the pump mount 40a. An alternative pump assembly 40' and pump mount 40a' is shown in Fig. 6.

These are clearly just some examples of vibrational components from which energy can be harvested using the system of this disclosure.

The system of this disclosure makes use of existing vibrational energy, that is otherwise wasted energy, to generate electrical power for electrical loads.

## Claims

1. An energy recovery system comprising: one or more vibrating components (20, 30, 40), one or more piezoelectric elements (10, 10a) arranged on or adjacent said one or more vibrating components to generate an electrical energy in response to vibrational movement of the one or more vibrating components; and a storage device (5) to store the electrical energy generated by the one or more piezoelectric elements.

2. The system of claim 1, further wherein the storage device (5) is connected to one or more loads (3) to provide power to the one or more loads.

3. The system of claim 1 or 2, wherein the one or more piezoelectric elements (10, 10a) is mounted adjacent the one or more vibrating components (10, 20, 30).

4. The system of claim 1 or 2, wherein the one or more piezoelectric elements (10, 10a) is mounted directly on the one or more vibrating components (10, 20, 30).

5. The system of any preceding claim, wherein the one or more vibrating components comprises a fan motor, a compressor and/or a pump.

6. A system according to any preceding claim, comprising one or more appliance units (2) each having one or more of said vibrating components.

7. A system according to claim 6, wherein said one or more appliance units includes a heating and/or a cooling device associated with one or more of said vibrating components.

8. A system according to claim 6, wherein said one or more appliance units includes an oven, a chiller or a beverage dispenser.

9. A system according to claim 6 or 7, wherein said one or more appliance units is an aircraft galley insert.

10. A system as claimed in claim 2 or any claim depending thereon, wherein said one or more loads (3) includes one or more lights.

11. An aircraft galley unit comprising comprising: one or more vibrating components, one or more piezoelectric elements arranged on or adjacent said one or more vibrating components to generate an electrical energy in response to vibrational movement of the one or more vibrating components; and a storage device to store the electrical energy generated by the one or more piezoelectric elements.

12. An aircraft galley comprising a plurality of aircraft galley units as claimed in claim 11.
